# EUROPÄISCHE PATENTANMELDUNG

(11) **EP 1 401 193 A2**
(43) Veröffentlichungstag der Anmeldung: **24.03.2004**
(21) Anmeldenummer: 03020951.4
(22) Anmeldetag: 16.09.2003
(51) Int. Cl.: H04N 3/15, H04N 5/232

(54) **Auslösen von Bildaufnahmen**

(30) Priorität: 23.09.2002 DE 10244162
(71) Anmelder: Sick AG, 79183 Waldkirch, Breisgau (DE)
(72) Erfinder: Braune, Ingolf, 79194 Gundelfingen (DE)
(74) Vertreter: Manitz, Finsterwald & Partner GbR

(57) **Zusammenfassung**

Die Erfindung betrifft ein Verfahren zum Auslösen einer Bildaufnahme mittels wenigstens eines Kamerasystems, bei dem in einem Nichtaufnahmezustand mittels zumindest einer Strahlungsquelle wenigstens ein Teilbereich einer Bildaufnahmefläche des Kamerasystems beaufschlagt wird, das hierbei von der Bildaufnahmefläche abgeleitete Signal einer Auswerteeinrichtung zugeführt und als ein Nichtaufnahmesignal gewertet wird, und bei einer Änderung des Nichtaufnahmesignals automatisch die Bildaufnahme ausgelöst wird. Die Erfindung betrifft ferner ein Kamerasystem.

## Beschreibung

Die Erfindung betrifft ein Verfahren zum Auslösen einer Bildaufnahme mittels wenigstens eines Kamerasystems. Die Erfindung betrifft ferner ein Kamerasystem.

In Verbindung mit Bildverarbeitungssystemen, wie sie insbesondere in der Automatisierungstechnik, aber auch in der Sicherheitstechnik eingesetzt werden, ist es häufig erwünscht, mit der Bildaufnahme erst dann zu beginnen, wenn sich das aufzunehmende Objekt an einer vorgegebenen Position relativ zum verwendeten Kamerasystem befindet und/oder wenn bestimmte vorgegebene Beleuchtungsverhältnisse herrschen. Um ein Triggersignal zum Start der Bildaufnahme zu erhalten, ist es bekannt, am Kamerasystem einen digitalen Triggereingang vorzusehen, an den ein Sensor angeschlossen werden kann, der Bestandteil einer Lichtschranke oder eines Lichttasters zum Nachweisen einer die Bildaufnahme auslösenden Situation ist und mit dem die jeweils gewünschten optimalen Aufnahmebedingungen nachgewiesen werden können. Eine weitere bekannte Vorgehensweise besteht darin, eine permanente Folge von Bildaufnahmen durchzuführen und die aufgenommenen Bilder anschließend auszuwerten.

Die bekannten Methoden zur automatischen Triggerung der Bildaufnahme, d.h. zum automatischen Auslösen der Bildaufnahme, weisen jedoch Nachteile auf, da sie mit einem vergleichsweise großen messtechnischen Aufwand verbunden sind oder - im Fall der permanenten Bildaufnahme - Aufnahmen mit unzureichender Qualität entstehen können, da hierbei letztlich nur eine zufällige Bildaufnahme erfolgt und eine Entscheidung lediglich über eine Auswertung der Aufnahmen getroffen wird. Außerdem führt die erforderliche Verwendung eines leistungsfähigen Auswerterechners zu einem hohen Verarbeitungsaufwand.

In der DE 101 19 498 C1 ist eine Möglichkeit zum Auslösen von Bildaufnahmen beschrieben, bei der ein mehrere Sensorelemente umfassender CMOS-Bildsensor vorgesehen ist und mit einem Triggerbereich, der von einer frei gewählten Teilmenge von in derselben Zeile liegenden Sensorelementen gebildet ist, Triggerdaten geliefert werden, die in einer Steuerungseinrichtung mit Hilfe von Mustererkennungsverfahren auf das Vorliegen von Abbildern der aufzunehmenden Objekte hin überprüft werden. Problematisch kann hierbei die grundsätzlich vorhandene Störungsanfälligkeit werden, da gewährleistet sein muss, dass die aufzunehmenden Objekte überhaupt zu Triggerdaten führen, in denen die jeweiligen Abbilder nachgewiesen werden können.

Aufgabe der Erfindung ist es, eine Möglichkeit zum automatischen Triggern von Bildaufnahmen zu schaffen, die sich durch eine hohe Zuverlässigkeit, eine hohe Triggergenauigkeit sowie durch einen geringen Aufwand sowohl hinsichtlich der gerätetechnischen Anforderungen als auch bei der Verarbeitung der Bilddaten auszeichnet.

Die Lösung dieser Aufgabe erfolgt zum einen durch die Merkmale des unabhängigen Verfahrensanspruchs und insbesondere dadurch, dass in einem Nichtaufnahmezustand mittels zumindest einer Strahlungsquelle wenigstens ein Teilbereich einer Bildaufnahmefläche des Kamerasystems beaufschlagt wird, das hierbei von der Bildaufnahmefläche abgeleitete Signal einer Auswerteeinrichtung zugeführt und als ein Nichtaufnahmesignal gewertet wird, und bei einer Änderung des Nichtaufnahmesignals automatisch die Bildaufnahme ausgelöst wird.

Erfindungsgemäß wird die Bildaufnahmefläche selbst als Triggersensor verwendet, wodurch auf einen zusätzlichen Sensor verzichtet werden kann. Des weiteren ist von Vorteil, dass mit dem beaufschlagten Teilbereich der Bildaufnahmefläche lediglich ein begrenzter Teilbereich ausgewertet zu werden braucht, wodurch eine hohe Abtastrastrate und somit eine hohe Triggergenauigkeit erzielt werden kann. Ein weiterer Vorteil besteht darin, dass die Position des als Trigger-Teilbereich dienenden Bildausschnitts auf der Bildaufnahmefläche grundsätzlich frei gewählt werden kann. Das Kamerasystem kann hierdurch auf einfache Weise an die Anforderungen des jeweiligen Anwendungsfalls angepasst werden. Eine Justage und Integration von zusätzlichen Bauelementen, insbesondere von separaten Sensoren, ist nicht erforderlich.

Da erfindungsgemäß mit einer Trigger-Strahlungsquelle gearbeitet wird, ist das Auslösen von Bildaufnahmen gemäß der Erfindung grundsätzlich unabhängig von den aufzunehmenden Objekten und damit in vorteilhafter Weise besonders störungssicher. Die Auswerteeinrichtung braucht also nicht nach den Objekten selbst zu suchen, sondern lediglich auf Änderungen eines eindeutig durch die Trigger-Strahlungsquelle definierten Signals zu reagieren. Durch entsprechende Formung des Trigger-Strahles kann ein Strahlungsfleck von beliebiger geometrischer Form auf der Bildaufnahmefläche erzeugt werden, der von den aufzunehmenden Objekten unabhängig ist. Hierdurch zeichnet sich die erfindungsgemäße Lösung durch eine besonders hohe Zuverlässigkeit aus. Aufgrund der erfindungsgemäßen Objektunabhängigkeit sind keine Maßnahmen erforderlich, die während des Nichtaufnahmezustandes für einen ausreichenden Kontrast zwischen dem Hintergrund und den aufzunehmenden Objekten sorgen. Insbesondere kann erfindungsgemäß hierdurch auf eine permanente Ausleuchtung eines Überwachungsbereiches verzichtet werden.

Die Lösung der der Erfindung zugrunde liegenden Aufgabe erfolgt außerdem durch die Merkmale des unabhängigen Vorrichtungsanspruchs und insbesondere dadurch, dass das Kamerasystem wenigstens eine Bildaufnahmefläche, eine Auswerteeinrichtung zum Auslesen der Bildaufnahmefläche und zumindest eine Strahlungsquelle umfasst, mittels welcher in einem Nichtaufnahmezustand wenigstens ein Teilbereich der Bildaufnahmefläche beaufschlagbar ist, wobei die Auswerteeinrichtung derart ausgebildet ist, dass das von dem beaufschlagten Teilbereich der Bildaufnahmefläche stammende Signal als ein Nichtaufnahmesignal gewertet, eine Änderung des Nichtaufnahmesignals erkannt und bei einer Änderung des Nichtaufnahmesignals automatisch ein Auslösesignal zum Auslösen einer Bildaufnahme erzeugt wird.

Bevorzugte Ausführungsformen der Erfindung sind in den Unteransprüchen, der Zeichnung sowie der Beschreibung angegeben.

So wird gemäß einer besonders bevorzugten Ausführungsform der Erfindung vorgeschlagen, dass der Ausbreitungsweg der Strahlung von der Strahlungsquelle zur Bildaufnahmefläche durch einen im Sichtbereich des Kamerasystems liegenden Überwachungsbereich hindurch verläuft. Hierdurch können sich bewegende Objekte, die mittels des Kamerasystems aufgenommen werden sollen, direkt ihre eigene Aufnahme auslösen, indem sie in den Sichtbereich des Kamerasystems gelangen und mit der den Überwachungsbereich durchquerenden Strahlung wechselwirken.

Eine bevorzugte Möglichkeit zur Auslösung der Bildaufnahme besteht darin, eine Verschiebung des mit Strahlung von der Strahlungsquelle beaufschlagten Teilbereichs auf der Bildaufnahmefläche als eine die Bildaufnahme auslösende Änderung zu werten.

Eine Verschiebung des Teilbereichs auf der Bildaufnahmefläche kann beispielsweise dadurch erfolgen, dass nach dem Lichttasterprinzip gearbeitet und der Ausbreitungsweg der Strahlung derart gewählt wird, dass in einen Überwachungsbereich des Kamerasystems gelangende Objekte den Ausbreitungsweg der Strahlung derart verändern, dass zwar weiterhin Strahlung auf die Bildaufnahmefläche gelangt, der Auftreffpunkt der Strahlung jedoch gegenüber dem Nichtaufnahmezustand auf der Bildaufnahmefläche verschoben ist. Die Auswerteeinrichtung ist dabei derart ausgebildet, dass sie diese Verschiebung erkennt und daraufhin für das Auslösen der Bildaufnahme sorgt.

Eine weitere bevorzugte Möglichkeit besteht darin, das Ausbleiben der auf dem Teilbereich der Bildaufnahmefläche auftreffenden Strahlung als eine die Bildaufnahme auslösende Änderung zu werten.

Dies kann insbesondere dadurch erreicht werden, dass nach dem Lichtschrankenprinzip gearbeitet und der Ausbreitungsweg der Strahlung derart gewählt wird, dass in einen Überwachungsbereich des Kamerasystems gelangende Objekte den Ausbreitungsweg der Strahlung unterbrechen. In diesem Fall erkennt die Auswerteeinrichtung, dass der zuvor noch beaufschlagte Teilbereich auf der Bildaufnahmefläche kein Signal mehr liefert, was von der Auswerteeinrichtung als eine Änderung interpretiert wird, die das Auslösen einer Bildaufnahme zur Folge hat.

In einer besonders bevorzugten Ausführungsform der Erfindung wird der mittels der Strahlungsquelle zu beaufschlagende Teilbereich der Bildaufnahmefläche vorgegeben und im Nichtaufnahmezustand ausschließlich dieser Teilbereich ausgewertet. Für die Auswertung lediglich des Teilbereichs wird vergleichsweise wenig Zeit benötigt, wodurch eine vorteilhafte Erhöhung der Abtastrate ermöglicht wird, was wiederum zu einer vorteilhaften Erhöhung der Triggergenauigkeit führt, da das Eintreten der die Bildaufnahme auslösenden Bedingung extrem zeitnah erfasst werden kann.

Des weiteren wird erfindungsgemäß vorgeschlagen, dass der Ausbreitungsweg der Strahlung von der Strahlungsquelle zur Bildaufnahmefläche einstellbar ist. Hierdurch kann der Auftreffpunkt der Strahlung auf der Bildaufnahmefläche und damit die Lage des im Nichtaufnahmezustand auszuwertenden Teilbereichs auf einfache Weise frei gewählt werden. Das Einstellen unterschiedlicher Ausbreitungswege kann beispielsweise durch Bewegen, insbesondere Verschwenken, der Strahlungsquelle relativ zur Bildaufnahmefläche erfolgen.

Als Strahlungsquelle kann eine ohnehin vorhandene Beleuchtungseinrichtung verwendet werden, die auch zum Ausleuchten eines Überwachungsbereichs des Kamerasystems vorgesehen ist. Eine separate Trigger-Strahlungsquelle, die ausschließlich zum Beaufschlagen des Teilbereiches der Bildaufnahmefläche des Kamerasystems dient, ist dadurch nicht erforderlich.

Ferner kann vorgesehen sein, dass das Auslösen der Bildaufnahme das Aktivieren einer Beleuchtungseinrichtung umfasst. So kann beispielsweise gleichzeitig mit dem Start der Bildaufnahme die Beleuchtung aktiviert werden, die für eine optimale Ausleuchtung des Aufnahmebereichs sorgt. Im Nichtaufnahmezustand braucht die Beleuchtungseinrichtung daher nicht aktiv zu sein, da für die automatische Triggerung der Bildaufnahme die den Teilbereich der Bildaufnahmefläche beaufschlagende Strahlungsquelle vorgesehen ist.

Gemäß einer besonders bevorzugten Ausführungsform der Erfindung wird vorgeschlagen, das durch Beaufschlagen des Teilbereiches der Bildaufnahmefläche erhaltene Signal zur Funktionsüberprüfung, insbesondere zur Bestimmung des Verschmutzungsgrades, zu verwenden.

Hierdurch wird das mittels der Strahlungsquelle bereitgestellte Signal außerdem dazu genutzt, die optischen Verhältnisse im Ausbreitungsweg der Triggerstrahlung zu überprüfen. Verschmutzungen z.B. durch Ablagerungen auf den verwendeten Optiken führen zu einer Verringerung der Intensität der den Teilbereich der Bildaufnahmefläche beaufschlagenden Strahlung. Durch Auswerten des Signals mittels der Auswerteeinrichtung oder mittels eines separaten Auswertemoduls und damit durch Überwachen der Intensität der die Bildaufnahmefläche erreichenden Strahlung kann eine permanente Überwachung der Funktionsfähigkeit des Systems sichergestellt werden.

Die Bildaufnahmefläche des Kamerasystems wird vorzugsweise von einem ortsauflösenden Sensor gebildet. Hierfür kommt beispielsweise ein CMOS-, CCD oder CID-Detektor in Frage. Grundsätzlich können erfindungsgemäß beliebige ortsauflösende Detektoren eingesetzt werden, die für die Wellenlängen der verwendeten Strahlung empfindlich sind.

In Abhängigkeit von den jeweils in der Praxis erforderlichen Anforderungen kann die Trigger-Strahlungsquelle von der Bildaufnahmefläche räumlich getrennt angeordnet oder zusammen mit der Bildaufnahmefläche in eine gemeinsame Baueinheit integriert sein. In letzterem Fall wird eine in vorteilhafter Weise kompakte und als Ganzes handhabbare Einheit geschaffen.

Die geometrische Form der auf der Bildaufnahmefläche auftreffenden Strahlung und damit - zumindest näherungsweise - die geometrische Form des Trigger-Teilbereiches der Bildaufnahmefläche kann grundsätzlich beliebig gewählt werden. So kann die Triggerstrahlung z.B. punktförmig, in Form eines ausgedehnten Lichtflecks oder linienförmig auf der Bildaufnahmefläche abgebildet werden.

Die Erfindung wird im folgenden beispielhaft unter Bezugnahme auf die Zeichnung beschrieben. Es zeigen:
- Fig. 1: rein schematisch in einer Seitenansicht eine Ausführungsform eines erfindungsgemäßen Kamerasystems, bei dem nach dem Lichttasterprinzip gearbeitet wird,
- Fig. 2a und 2b: Ansichten entsprechend Fig. 1 weiterer Ausführungsformen eines erfindungsgemäßen Kamerasystems, bei dem nach dem Lichtschrankenprinzip gearbeitet wird,
- Fig. 3: schematisch eine perspektivische Ansicht eines nach dem Lichttasterprinzip arbeitenden Kamerasystems gemäß einer weiteren Ausführungsform der Erfindung, und
- Fig. 4: schematisch eine perspektivische Ansicht eines nach dem Lichtschrankenprinzip arbeitenden Kamerasystems gemäß einer weiteren Ausführungsform der Erfindung.

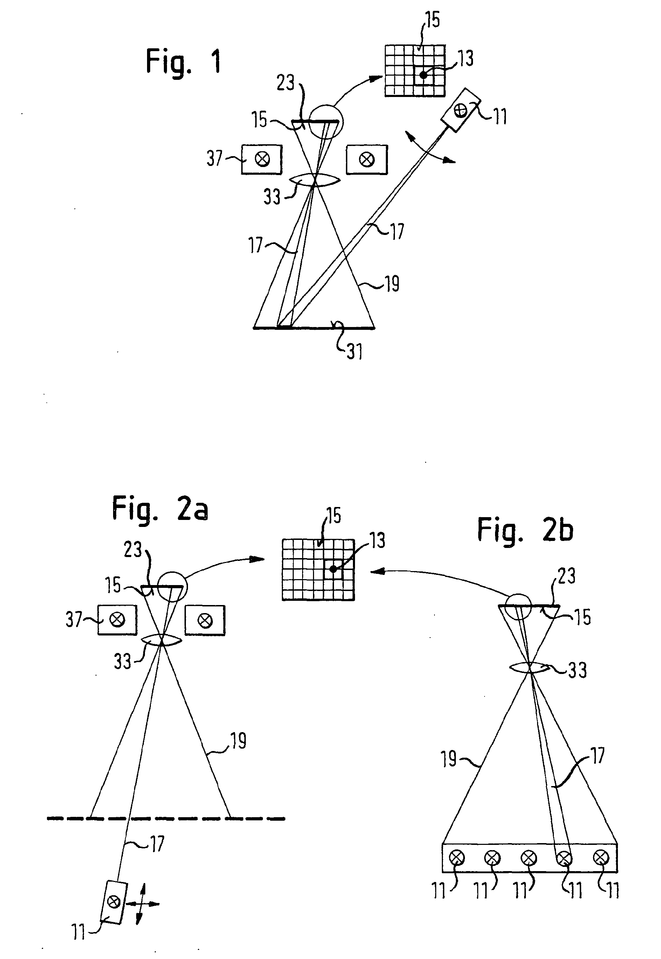

Von dem in Fig. 1 dargestellten Kamerasystem sind lediglich eine als Linse angedeutete Abbildungsoptik 33 und ein ortsauflösender Sensor 23 vom CMOS-Typ gezeigt, der eine strahlungssensitive Bildaufnahmefläche 15 umfasst, die in eine Vielzahl von Nachweiselementen oder Pixeln unterteilt ist. Als Abbildungsoptik kann eine grundsätzlich beliebig ausgestaltete optische Abbildungseinrichtung vorgesehen sein, die z.B. ein Objektiv oder ein Linsensystem umfasst.

Ferner ist eine Strahlungsquelle 11 vorgesehen, deren Wellenlänge grundsätzlich beliebig ist, solange die emittierte Strahlung 17 mittels des Sensors 23 nachweisbar ist.

Das Kamerasystem gemäß Fig. 1 arbeitet nach dem Lichttaster- und damit nach dem Triangulationsprinzip. Die von der Strahlungsquelle 11 ausgesandte Strahlung 17 wird an einer Reflexionsfläche 31, die in einem von der Kamera einsehbaren Überwachungsbereich 19 liegt, derart reflektiert, dass sie auf die Bildaufnahmefläche 15 des Sensors 23 auftrifft, dabei jedoch nur ein in dem gezeigten Ausführungsbeispiel vergleichsweise kleiner Teilbereich 13 der Bildaufnahmefläche 15 beaufschlagt oder beleuchtet wird. Die Position des Teilbereichs 13 auf der Bildaufnahmefläche 15 ist von der relativen Anordnung der Strahlungsquelle 11 und der Bildaufnahmefläche 15 abhängig. Wie durch den Doppelpfeil 1 in Fig. 1 angedeutet, kann die Strahlungsquelle 11 relativ zum Sensor 23 verschwenkt werden, wodurch die Lage der Teilfläche 13 auf der Bildaufnahmefläche 15 verändert werden kann.

Der vorstehend erwähnte Überwachungsbereich 19 des Kamerasystems kann mit dem gesamten, mittels des Sensors 13 auswertbaren Sichtbereich der Kamera zusammenfallen, alternativ jedoch auch lediglich einen Teilbereich des Sichtbereichs darstellen.

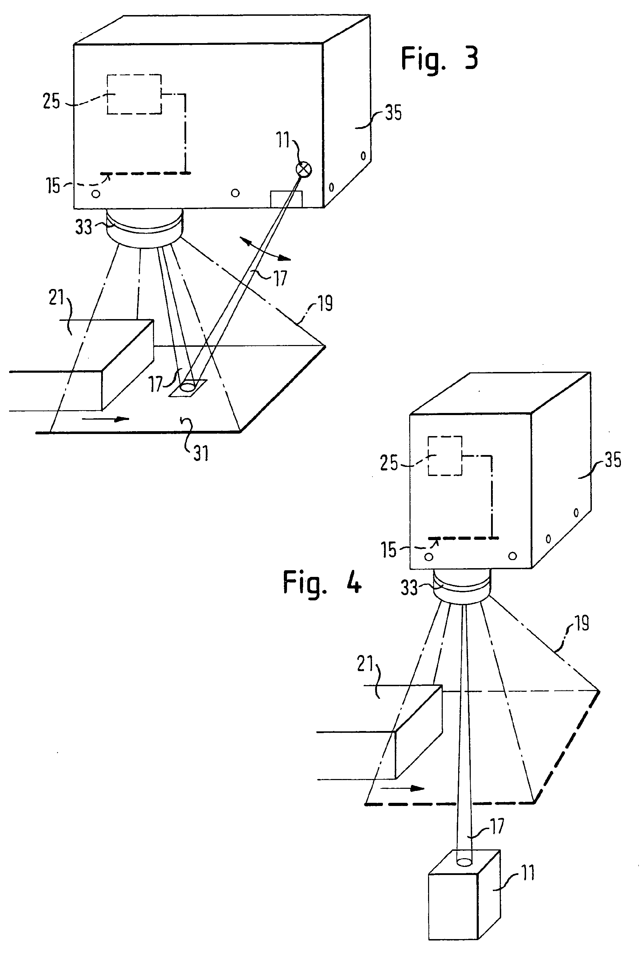

Wenn ein aufzunehmendes Objekt in den Überwachungsbereich 19 eindringt und in den Ausbreitungsweg der Strahlung 17 zwischen der Strahlungsquelle 11 und dem Sensor 23 gelangt, dann wird die Strahlung 17 nicht mehr von der Reflexionsfläche 31, sondern vielmehr von dem Objekt reflektiert. Hierdurch wird der Ausbreitungsweg der Strahlung 17 und damit die Lage des Teilbereichs 13 auf der Bildaufnahmefläche 15 verändert. In Fig. 3 ist ein derartiges Objekt 21 dargestellt, das in den Überwachungsbereich 19 eingedrungen ist und sich dem Ausbreitungsweg der Strahlung 17 nähert. In der in Fig. 3 dargestellten Situation befindet sich das Kamerasystem noch im Nichtaufnahmezustand, da die von der Strahlungsquelle 11 ausgesandte Strahlung 17 noch von der Reflexionsfläche 31, die beispielsweise von einem Transportband für die Objekte 21 gebildet ist, reflektiert wird. Sobald das Objekt 21 in den Strahlengang zwischen Strahlungsquelle 11 und Optik 33 der Kamera gelangt, wird die Strahlung 17 von der gegenüber der Reflexionsfläche 31 erhöhten Oberseite des Objekts 21 reflektiert, wodurch sich aufgrund des Triangulationsprinzips eine Verschiebung des in Fig. 3 nicht dargestellten Auftreffbereiches der Strahlung 17 auf der Bildaufnahmefläche 15 des Kamerasensors 23 ergibt.

Eine in Fig. 3 lediglich angedeutete Auswerteeinrichtung 25 des erfindungsgemäßen Kamerasystems ist in der Lage, diese Verschiebung des Triggerbereiches 13 auf der Bildaufnahmefläche 15 anhand einer entsprechenden Änderung des Ausgangssignals des Sensors 23 zu erkennen und daraufhin eine Bildaufnahme zu initiieren.

Bei der Anordnung gemäß Fig. 3 sind die Strahlungsquelle 11 und die Kamera in einem gemeinsamen Gehäuse 35 angeordnet, wodurch sich eine kompakte, als Ganzes handhabbare Aufnahmeeinheit ergibt.

Die Fig. 2a und 2b zeigen schematisch Möglichkeiten zur automatischen Triggerung, bei denen jeweils nach dem Lichtschrankenprinzip gearbeitet wird. Hierbei ist die relative Anordnung von Strahlungsquelle 11 und Bildaufnahmefläche 15 des Sensors 23 jeweils derart gewählt, dass ein in den den Überwachungsbereich 19 der Kamera durchquerenden Strahlungsgang gelangendes Objekt den Ausbreitungsweg der Strahlung 17 von der Strahlungsquelle 11 zur Bildaufnahmefläche 15 unterbricht, und zwar derart, dass die Strahlung 17 nicht auf die Bildaufnahmefläche 15 reflektiert wird. Die hier erfolgende Veränderung des von dem Trigger-Teilbereich 13 auf der Bildaufnahmefläche 15 stammenden Signals besteht in dem Ausbleiben des Signals, sobald der Strahlengang durch das Objekt unterbrochen wird. Die Auswerteeinrichtung 25 (vgl. Fig. 4) ist derart ausgebildet, dass dieses Ausbleiben des Nichtaufnahmesignals detektiert und daraufhin die Bildaufnahme gestartet wird. Fig. 4 zeigt die räumlich getrennte Anordnung von Strahlungsquelle 11 und Bildaufnahmefläche 15 auf einander gegenüberliegenden Seiten des Überwachungsbereiches 19 des Kamerasystems.

In der Variante der Fig. 2a ist eine einzige Strahlungsquelle 11 vorgesehen, die zum Verändern der Lage des Trigger-Teilbereiches 13 auf der Bildaufnahmefläche 15 des Sensors 23 relativ zum Sensor 23 bewegbar ist, wie es durch die Doppelpfeile angedeutet ist.

In der in Fig. 2b dargestellten Variante sind mehrere Strahlungsquellen 11 in eine Auflage für die aufzunehmenden Objekte integriert. In Abhängigkeit von dem jeweils gewünschten Verlauf der Triggerstrahlung 17 im Überwachungsbereich 19 der Kamera kann gezielt eine der Strahlungsquellen 11 aktiviert werden. Da die gesamte Bildaufnahmefläche 15 des Sensors 23 für den kleinen Trigger-Teilbereich 13 zur Verfügung steht, ist für derartige Änderungen des Ausbreitungsweges der Strahlung 17 keine Neujustierung des Kamerasystems erforderlich.

Die Optik 33 ist in dem Ausführungsbeispiel gemäß Fig. 1 und Fig. 2a von einer Beleuchtungseinrichtung 37 umgeben, die z.B. in Form eines Blitzlichtrings vorgesehen ist, der mit dem Auslösen der Bildaufnahme aktiviert wird, um auf diese Weise nur dann für eine Ausleuchtung des Überwachungsbereiches 19 zu sorgen, wenn dies zum Aufnehmen des jeweiligen Objektes 21 erforderlich ist.

In allen vorstehend beschriebenen Varianten der Erfindung wird in vorteilhafter Weise die Bildaufnahmefläche 15, mit der die eigentlichen Bildaufnahmen von Objekten durchgeführt werden, gleichzeitig dazu genutzt, ein Triggersignal bereitzustellen, indem ein durch Auswerten eines Teilbereiches 13 der Bildaufnahmefläche 15 im Nichtaufnahmezustand bereitgestelltes Signal mittels einer dafür ausgebildeten Auswerteeinrichtung 25 permanent auf Veränderungen hin überprüft wird. Sobald die jeweils vorgegebene Veränderungsbedingung eintritt, wird die Bildaufnahme mittels der Auswerteeinrichtung 25 ausgelöst, woraufhin entweder die gesamte Bildaufnahmefläche 15 oder ein vorgegebener Teilbereich zur Durchführung der eigentlichen Bildaufnahme ausgelesen wird.

Um Fehlauslösungen zu vermeiden, kann vorgesehen sein, dass Verschiebungen oder Intensitätsänderungen des Trigger-Teilbereichs 13 bzw. der Triggerstrahlung 17 auf der Bildaufnahmefläche 15 nur dann zu einem Start der Bildaufnahme führen, wenn die Verschiebung bzw. die Intensitätsänderung eine vorgegebene Toleranzgrenze übersteigt.

Die Auswerteeinrichtung 25 kann außerdem durch Auswerten des von der Trigger-Strahlungsquelle 11 beaufschlagten Teilbereiches 13 der Bildaufnahmefläche 15 im Nichtaufnahmezustand den Verschmutzungsgrad im Ausbreitungsweg der Triggerstrahlung 17 bestimmen, um auf diese Weise eine Funktionsüberprüfung durchzuführen und bei Erreichen eines vorgegebenen Verschmutzungsgrades z.B. ein Warnsignal bereitzustellen. Diesbezüglich wird auch auf den Einleitungsteil verwiesen.

### Bezugszeichenliste

- 11: Strahlungsquelle
- 13: Teilbereich
- 15: Bildaufnahmefläche
- 17: Strahlung
- 19: Überwachungsbereich
- 21: Objekt
- 23: Sensor
- 25: Auswerteeinrichtung
- 31: Reflexionsfläche
- 33: Optik
- 35: Gehäuse
- 37: Beleuchtungseinrichtung

## Patentansprüche

1. Verfahren zum Auslösen einer Bildaufnahme mittels wenigstens eines Kamerasystems, bei dem
- in einem Nichtaufnahmezustand mittels zumindest einer Strahlungsquelle (11) wenigstens ein Teilbereich (13) einer Bildaufnahmefläche (15) des Kamerasystems beaufschlagt wird,
- das hierbei von der Bildaufnahmefläche (15) abgeleitete Signal einer Auswerteeinrichtung (25) zugeführt und als ein Nichtaufnahmesignal gewertet wird, und
- bei einer Änderung des Nichtaufnahmesignals automatisch die Bildaufnahme ausgelöst wird.

2. Verfahren nach Anspruch 1,
**dadurch gekennzeichnet,**
**dass** der Ausbreitungsweg der Strahlung (17) von der Strahlungsquelle (11) zur Bildaufnahmefläche (15) durch einen im Sichtbereich des Kamerasystems liegenden Überwachungsbereich (19) hindurch verläuft.

3. Verfahren nach Anspruch 1 oder 2,
**dadurch gekennzeichnet,**
**dass** eine Verschiebung des mit Strahlung (17) von der Strahlungsquelle (11) beaufschlagten Teilbereiches (13) auf der Bildaufnahmefläche ( 15) als eine die Bildaufnahme auslösende Änderung gewertet wird.

4. Verfahren nach einem der vorhergehenden Ansprüche,
**dadurch gekennzeichnet,**
**dass** das Beaufschlagen des Teilbereiches (13) der Bildaufnahmefläche (15) nach dem Lichttasterprinzip derart erfolgt, dass der Ausbreitungsweg der Strahlung (17) von der Strahlungsquelle (11) zur Bildaufnahmefläche (15) durch in einen Überwachungsbereich (19) des Kamerasystems gelangende Objekte (21) verändert wird.

5. Verfahren nach einem der vorhergehenden Ansprüche,
**dadurch gekennzeichnet,**
**dass** das Ausbleiben der auf dem Teilbereich (13) der Bildaufnahmefläche (15) auftreffenden Strahlung (17) als eine die Bildaufnahme auslösende Änderung gewertet wird.

6. Verfahren nach einem der vorhergehenden Ansprüche,
**dadurch gekennzeichnet,**
**dass** das Beaufschlagen des Teilbereiches (13) der Bildaufnahmefläche (15) nach dem Lichtschrankenprinzip derart erfolgt, dass der Ausbreitungsweg der Strahlung (17) von der Strahlungsquelle (11) zur Bildaufnahmefläche (15) durch in einen Überwachungsbereich (19) des Kamerasystems gelangende Objekte (21) unterbrochen wird.

7. Verfahren nach einem der vorhergehenden Ansprüche,
**dadurch gekennzeichnet,**
**dass** der mittels der Strahlungsquelle (11) zu beaufschlagende Teilbereich (13) der Bildaufnahmefläche (15) vorgegeben wird und im Nichtaufnahmezustand ausschließlich dieser Teilbereich (13) ausgewertet wird.

8. Verfahren nach einem der vorhergehenden Ansprüche,
**dadurch gekennzeichnet,**
**dass** der Ausbreitungsweg der Strahlung (17) von der Strahlungsquelle (11) zur Bildaufnahmefläche (15) einstellbar ist, insbesondere durch Bewegen der Strahlungsquelle (11) relativ zur Bildaufnahmefläche (15).

9. Verfahren nach einem der vorhergehenden Ansprüche,
**dadurch gekennzeichnet,**
**dass** als Strahlungsquelle (11) zumindest ein Teil einer vorhandenen, zum Ausleuchten eines Überwachungsbereichs des Kamerasystems vorgesehenen Beleuchtungseinrichtung verwendet wird.

10. Verfahren nach einem der vorhergehenden Ansprüche,
**dadurch gekennzeichnet,**
**dass** das Auslösen der Bildaufnahme das Aktivieren einer Beleuchtungseinrichtung (37) umfasst.

11. Verfahren nach einem der vorhergehenden Ansprüche,
**dadurch gekennzeichnet,**
**dass** das durch Beaufschlagen des Teilbereiches (13) der Bildaufnahmefläche (15) erhaltene Signal zur Funktionsüberprüfung, insbesondere zur Bestimmung des Verschmutzungsgrades, verwendet wird, wobei vorzugsweise hierzu die Intensität der den Teilbereich (13) beaufschlagenden Strahlung überwacht wird.

12. Verfahren nach einem der vorhergehenden Ansprüche,
**dadurch gekennzeichnet,**
**dass** ein Kamerasystem nach einem der nachstehenden Ansprüche verwendet wird.

13. Kamerasystem mit wenigstens einer Bildaufnahmefläche (15), einer Auswerteeinrichtung (25) zum Auslesen der Bildaufnahmefläche (15) und zumindest einer Strahlungsquelle (11), mittels welcher in einem Nichtaufnahmezustand wenigstens ein Teilbereich (13) der Bildaufnahmefläche (15) beaufschlagbar ist, wobei die Auswerteeinrichtung (25) derart ausgebildet ist, dass das von dem beaufschlagten Teilbereich (13) der Bildaufnahmefläche (15) stammende Signal als ein Nichtaufnahmesignal gewertet, eine Änderung des Nichtaufnahmesignals erkannt und bei einer Änderung des Nichtaufnahmesignals automatisch ein Auslösesignal zum Auslösen einer Bildaufnahme erzeugt wird.

14. Kamerasystem nach Anspruch 13,
**dadurch gekennzeichnet,**
**dass** die Bildaufnahmefläche (15) von einem ortsauflösenden Sensor (23) gebildet ist, insbesondere von einem Sensor vom CMOS-, CCDoder CID-Typ.

15. Kamerasystem nach Anspruch 13 oder 14,
**dadurch gekennzeichnet,**
**dass** die Strahlungsquelle (11) relativ zur Bildaufnahmefläche (15) bewegbar ist.

16. Kamerasystem nach einem der Ansprüche 13 bis 15,
**dadurch gekennzeichnet,**
**dass** die Strahlungsquelle (11) von der Bildaufnahmefläche (15) räumlich getrennt angeordnet ist.

17. Kamerasystem nach einem der Ansprüche 13 bis 15,
**dadurch gekennzeichnet,**
**dass** die Bildaufnahmefläche (15) und die Strahlungsquelle (11) in eine gemeinsame Baueinheit integriert sind.

18. Kamerasystem nach einem der Ansprüche 13 bis 17,
**dadurch gekennzeichnet,**
**dass** eine Anzeigeeinrichtung zum unterscheidbaren Anzeigen des Nichtaufnahmezustandes und des Aufnahmezustandes vorgesehen ist.

19. Kamerasystem nach einem der Ansprüche 13 bis 18,
**dadurch gekennzeichnet,**
**dass** das Auslösen der Bildaufnahme gemäß einem Verfahren nach einem der Ansprüche 1 bis 12 erfolgt.
